# EUROPÄISCHE PATENTSCHRIFT

(11) **EP 1 273 426 B1**
(45) Veröffentlichungstag und Bekanntmachung des Hinweises auf die Patenterteilung: **18.08.2010**
(21) Anmeldenummer: 02009998.2
(22) Anmeldetag: 04.05.2002
(51) Int. Cl.: B29C 47/08, B30B 11/24

(54) **Direktangetriebener Extruder und Verfahren zum Betrieb desselben**
Directly driven extruder and operating method of the same
Extrudeuse entraînée directement et méthode d'opération d'une telle extrudeuse

(30) Priorität: 03.07.2001 DE 10132002
(43) Veröffentlichungstag der Anmeldung: 08.01.2003
(73) Patentinhaber: Windmöller & Hölscher KG, 49525 Lengerich (DE)
(72) Erfinder: Middelberg, Gerhard, 49525 Lengerich (DE)

(56) Entgegenhaltungen:
- EP-A- 0 962 298
- EP-A- 1 182 027
- DE-A- 4 430 176
- DE-U- 29 910 332

## Beschreibung

Die Erfindung betrifft einen Extruder nach dem Oberbegriff des Anspruchs 1 sowie ein Verfahren zum Betrieb desselben.

Kunstofffolienextruder der oben beschriebenen Art werden in der Regel eingesetzt, um Kunststoffrohmaterial in einen schmelzeförmigen Zustand, der sich zur Weiterverarbeitung eignet, zu überführen. Diese Extruder werden hauptsächlich in Extrusionsanlagen, wie sie auch in der DE 199 31 147 vorgestellt werden, eingesetzt.

Der Antrieb der Extruderschnecken erfolgt mit Antriebseinheiten, welche über Getriebe entweder starr mit den Extruderschnecken verbunden sind, oder mit den Extruderschnecken über eine Ketten- oder Riemenverbindung das notwendige Drehmoment vermitteln.
Die in beiden Fällen verwendeten Getriebe sind teuer und sie haben einen großen Platzbedarf.

Die DE 299 10 332 U1 beschreibt einen Extruderantrieb, der ohne Getriebe auskommt. Dabei wird ein Motor in Form eines Scheibenläufers verwendet, um die Baulänge eines solchen Extruders in Grenzen zu halten.

Die europäische Patentanmeldung 1 182 027 A1 offenbart ebenfalls einen getriebelosen Extruderantrieb. Der dort gezeigte Elektromotor weist eine Hohlwelle auf, um die Extruderschnecke aus dem Gehäuse herausziehen zu können, ohne den Motor demontieren zu müssen.

Bei dem in der DE 44 30 176 A1 offenbarten Extruder sind Bestandteile des Antriebes sogar in der Extruderschnecke integriert.

Die US 5,540,495 zeigt einen Extruder für eine Spritzgießmaschine, der einen Motor für den Rotationsantrieb der Extruderschnecke enthält, welcher ohne Getriebe auf letztere wirkt. Für den Einspritzvorgang ist ein zweiter Motor vorgesehen, der für die axiale Bewegung der Extruderschnecke sorgt.

Nachteilig bei den genannten Konstruktionen ist allerdings, dass die verwendeten Motoren wegen des großen, bereitzustellenden Drehmoments meist besondere Konstruktionen sind, die meist teuer sind.

Daher besteht die Aufgabe der vorliegenden Erfindung darin, eine Vorrichtung und ein Verfahren vorzuschlagen, welches diese Getriebe überflüssig macht und welches die Verwendung von Motoren mit moderater Drehmomentbereitstellung ermöglicht.

Die Aufgabe wird durch den kennzeichnenden Teil des Anspruchs 1 gelöst.

Aufgrund des in der Regel großen Drehmomentbedarfs der Extruderschnecke ist es vorgesehen, eine Antriebseinheit aus mehreren Motoren, bei denen es sich um kostengünstige antriebstechnische Standardkomponenten handeln kann, vorzusehen. Im Elektromaschinenbau ist es mittlerweile üblich, hohe Momente und hier in erster Linie hohe Anfahrtsmomente durch hochpolige Synchron- oder Asynchronmotoren zu erzeugen. Im Allgemeinen ist jedoch auch die Verwendung von Gleichstromantrieben möglich.

Auch solche Maschinen könnten zur Bereitstellung eines ausreichenden Drehmoments miteinander gekoppelt werden. Bei der Verkopplung dieser modular aufgebauten Antriebseinheiten können schnell lösbare Verbindungsmittel eingesetzt werden, um beispielsweise schnell auf Änderungen der Anforderungen an die Drehmomentbereitstellung reagieren zu können, aber auch um Montagezeit einzusparen. Zu solchen Verbindungen können auch Riemen oder Ketten gehören. Bei Anordnungen, welche Riemen oder Ketten zum Drehmomentübertrag verwenden, fluchten die Drehachsen der Rotoren und der Extruderschnecke in der Regel nicht.

Als Verbindungsmittel, welche ein Fluchten der Drehachsen verschiedener zu verbindender drehbarer Komponenten (Rotoren und Extruderschnecke) ermöglichen, sind beispielsweise Funktionspaare aus Hohlwellen und Zapfen zu nennen. Jedoch wird auch die irreversible Verbindung drehbarer Komponenten oder die Verwendung von aus einem Teil gefertigten Rotoren und Schnecken als erfindungsgemäß angesehen.

Beim Einsatz von Elektromaschinen kann es ausreichen, die verschiedenen Motoren - vorzugsweise parallel - an eine gemeinsame Stromversorgung, die aus einem Frequenzwandler bestehen kann, anzuschließen.

Es ist jedoch auch möglich, verschiedene Frequenzwandler zu verwenden. Hierbei kann ein Motor drehzahlgeregelt werden und - in der Regelungshierarchie der verschiedenen Motoren - als Master fungieren. Als der Drehzahl übergeordnete Regelungsgröße kann beispielsweise der Massedruck im Extruderzylinder herangezogen werden.

In einem solchen Fall können die anderen Motoren strom- bzw. drehmomentgeregelt oder -gesteuert werden und als Slaves fungieren.

Weitere vorteilhafte Ausführungsformen und Ausführungsbeispiele der Erfindung ergeben sich aus den weiteren Ansprüchen, der gegenständlichen Beschreibung und den Zeichnungen.

Die einzelnen Figuren zeigen:
- Fig. 1:: Eine Seitenansicht eines Extruders mit einer Antriebseinheit, welche aus einem Motor besteht.
- Fig. 2:: Eine Seitenansicht eines Extruders mit einer Antriebseinheit, welche aus drei Motoren besteht.

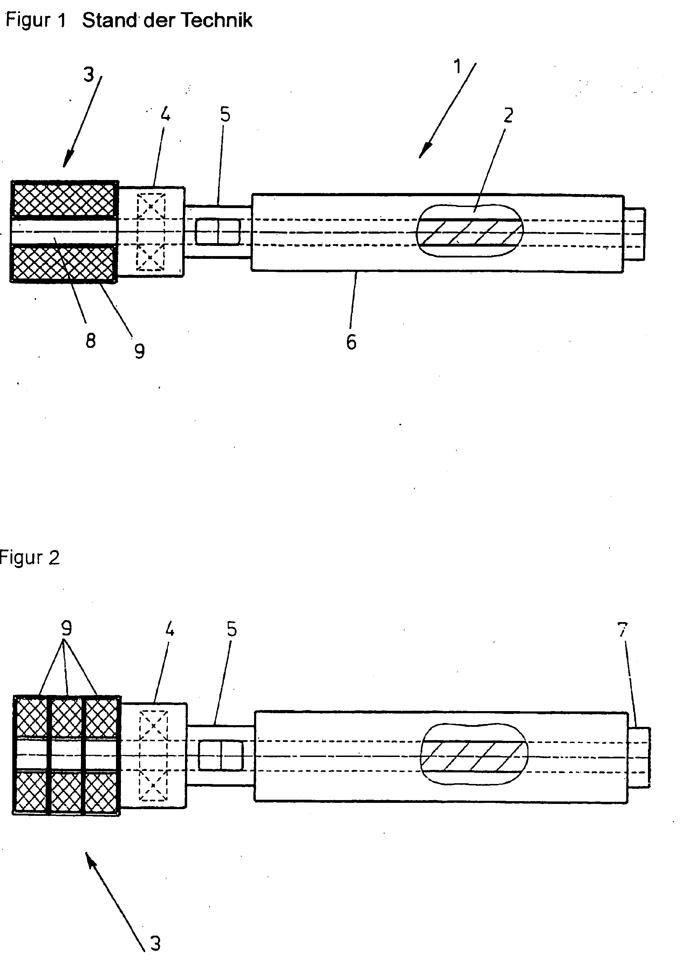

Figur 1 zeigt einen Extruder 1 gemäß des Standes der Technik, welcher einen Zylinder 6 aufweist, in dem sich eine Extruderschnecke 2 dreht. Die Extruderschnecke 2 wird von der Lagerung 4 gehalten. Die Extruderschnecke 2 ist starr mit dem Rotor 8 der Antriebseinheit 3, welche in diesem Ausführungsbeispiel aus einem Motor 9 besteht, verbunden. Die Verbindungsmittel des Rotors 8 und der Schnecke 2, welche hier aus einem Zapfen und einer Hohlwelle bestehen, sind hier nicht dargestellt. Im Betrieb wird dem Extruder granulatförmiges Kunststoffmaterial über einen nicht dargestellten Trichter in das Trichterstück 5 eingeführt. Die Kunststoffschmelze wird über den Extrusionsstutzen 7 extrudiert und in der Regel über geeignete Zuleitungen einem Kunststofffolienblaskopf zugeführt. Die beiden letzteren Bestandteile einer Blasfolienextrusionsanlage sind hier nicht dargestellt.

Figur 2 zeigt einen erfindungsgemäßen Extruder 1. Die Antriebseinheit 3 besteht hier aus drei scheibenförmigen Motoren 9 besteht, welche aneinandergereiht sind und welche gemeinsam das für die Drehbewegung der Extruderschnecke notwendige Drehmoment bereitstellen. Für die Zwecke dieser Anmeldung gilt ein Rotor (8) eines Motors (9) als Scheibenläufer, wenn das Verhältnis zwischen Länge und Durchmesser mindestens 1 : 1 beträgt. Die Verwendung solcher Scheibenläufer ist vorteilhaft, um bei begrenzter Baulänge der Antriebseinheit (3) ein hohes Drehmoment zu erzeugen.

Bei beiden Ausführungsbeispielen werden als Motoren (9) Elektromaschinen verwendet. Auf die Darstellung der elektrischen Zuleitungen und anderer Stromversorgungsvorrichtungen wie Frequenzwandlern wurde ebenfalls verzichtet.

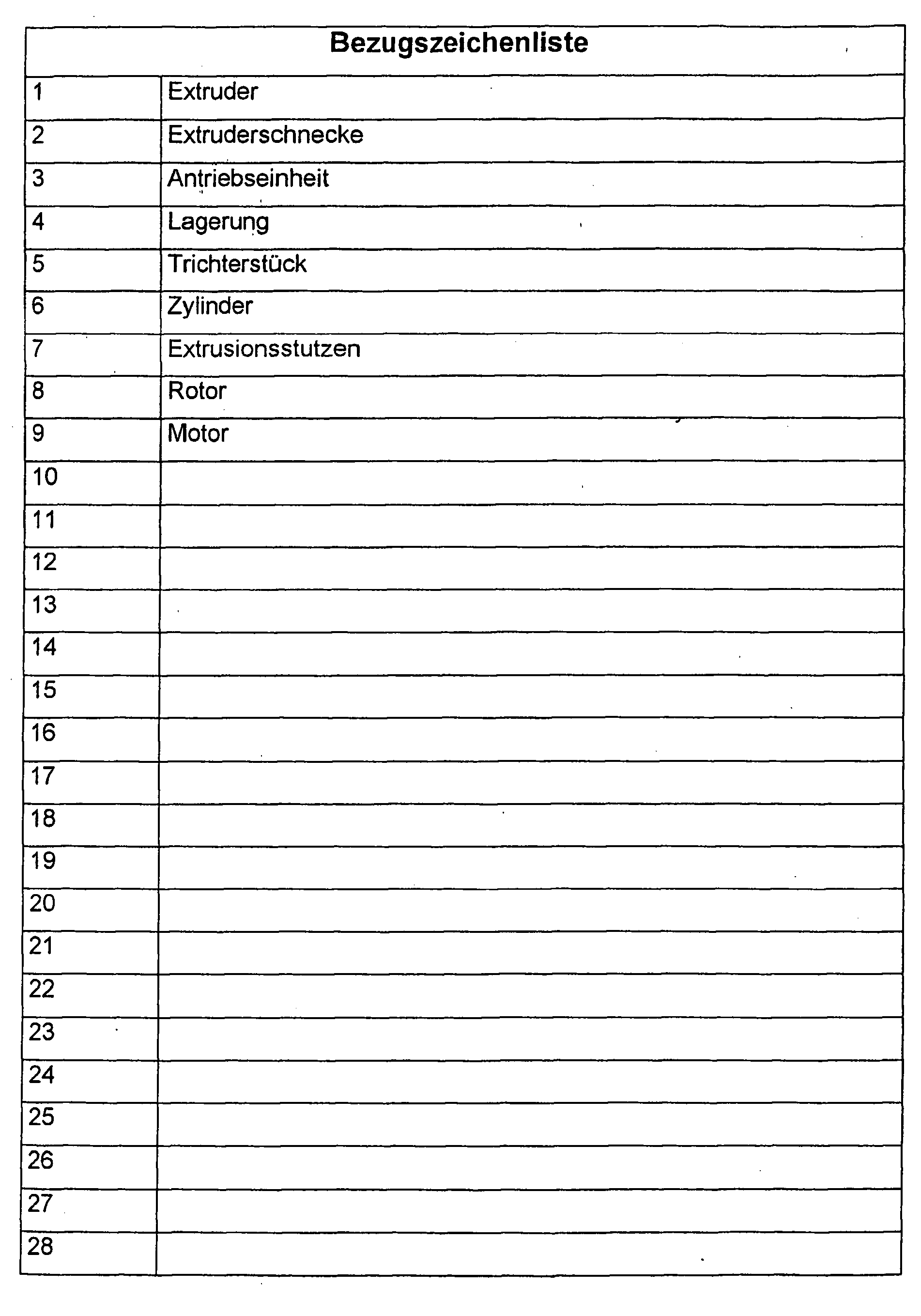

## Patentansprüche

1. Extruder (1), welcher vorzugsweise granulatförmiges Kunststoffmaterial in schmelzeförmigen Zustand überführt und welcher zumindest einen
a) Zylinder (6) aufweist, in dem sich eine
b) Extruderschnecke (2) dreht, welche mit einer
c) Antriebseinheit (3) mit zumindest einem Motor (9) verbunden ist, so dass die Antriebseinheit (3) das Drehmoment für die Drehbewegung der Extruderschnecke (2) bereitstellt,
d) wobei dem zumindest einen Motor (9) ein oder mehrere Rotoren (8) zugeordnet sind,
e) die Extruderschnecke (2) und der zumindest eine Rotor (8) im Betrieb die gleiche Drehzahl aufweisen,
**dadurch gekennzeichnet, dass**
f) die Antriebseinheit aus mehreren Motoren (9) besteht, welche gemeinsam das für die Drehbewegung der Extruderschnecke notwendige Drehmoment bereitstellen.

2. Extruder (1) nach Anspruch 1
**dadurch gekennzeichnet, dass**
die Drehachsen der Rotoren (8) zumindest zweier Motoren (9) miteinander fluchten.

3. Extruder (1) nach Anspruch 1 oder 2
**dadurch gekennzeichnet, dass**
die Drehachsen der Rotoren (8) zumindest zweier Motoren (9) und die Drehachse der Extruderschnecke (2) miteinander fluchten.

4. Extruder (1) nach einem der vorangegangenen Ansprüche
**dadurch gekennzeichnet, dass**
zumindest ein Teil der rotierenden Teile (Rotoren (8) und Extruderschnecke (2)) mit schnelllösbaren Verbindungsmitteln miteinander verbunden sind.

5. Extruder (1) nach einem der vorangegangenen Ansprüche
**dadurch gekennzeichnet, dass**
zumindest ein Teil der Motoren (9) scheibenförmige Rotoren (8), sogenannte Scheibenläufer, aufweist.

6. Extruder (1) nach einem der vorangegangenen Ansprüche
**dadurch gekennzeichnet, dass**
es sich bei den Motoren (9) um Elektromaschinen handelt.

7. Extruder (1) nach einem der vorangegangenen Ansprüche
**dadurch gekennzeichnet, dass**
es sich bei den Motoren (9) um Asynchronelektromaschinen handelt.

8. Extruder (1) nach einem der vorangegangenen Ansprüche
**dadurch gekennzeichnet, dass**
zumindest ein Teil der Motoren (9) der Antriebseinheit (3) an einen gemeinsamen Strom- bzw. Frequenzwandler angeschlossen ist.

9. Extruder (1) nach einem der vorangegangenen Ansprüche
**dadurch gekennzeichnet, dass**
die Motoren (9) geregelt werden, wobei der Regelung der Aus- oder Eingangsgrößen der Motoren (9) zumindest eine der folgenden Zustandsgrößen des Extruders (1) zugrundegelegt wird:
- Massendurchsatz des Extruders (1)
- Partialdruck im Zylinder (6) des Extruders (1)

10. Extruder (1) nach Anspruch 9
**dadurch gekennzeichnet, dass**
einer der Motoren (9) Drehzahlgeregelt ist, in der Regelungshierachie der Motoren (9) als Master fungiert und die Steuerung oder Regelung der restlichen Motoren (9) (Slaves) nach Drehmoment beziehungsweise Strom erfolgt.

11. Extruder nach einem der vorangegangenen Ansprüche
**dadurch gekennzeichnet, dass**
der Extruder Teil einer Extrusionsanlage, wie einer Blasfolienextrusionsanlage oder einer Gießfolienextrusionsanlage, ist.

12. Verfahren zum Betrieb eines Extruders (1), wobei vorzugsweise granulatförmiges Kunstoffmaterial in schmelzeförmigen Zustand überführt wird und wobei der Extruder (1) zumindest einen
a) Zylinder (6) aufweist, in dem sich eine
b) Extruderschnecke (2) dreht, welche mit einer
c) Antriebseinheit (3) mit zumindest einem Motor (9) verbunden ist, so dass die Antriebseinheit (3) das Drehmoment für die Drehbewegung der Extruderschnecke (2) bereitstellt,
d) wobei dem zumindest einen Motor (9) ein oder mehrere Rotoren (8) zugeordnet sind,
e) die Extruderschnecke (2) und der zumindest eine Rotor (8) im Betrieb mit der gleichen Drehzahl beaufschlagt werden,
**dadurch gekennzeichnet, dass**
f) die Antriebseinheit aus mehreren Motoren besteht, welche gemeinsam das für die Drehbewegung der Extruderschnecke notwendige Drehmoment bereitstellen.

## Claims

1. Extruder (1), which transforms preferably granular plastics material into a molten state and has at least
a) a barrel (6), in which
b) there rotates an extruder screw (2), which
c) is connected to a drive unit (3) with at least one motor (9), so that the drive unit (3) provides the torque for the rotational movement of the extruder screw (2),
d) the at least one motor (9) being assigned one or more rotors (8) and
e) the extruder screw (2) and the at least one rotor (8) having the same rotational speed during operation,
**characterized in that**
f) the drive unit comprises a number of motors (9), which together provide the torque necessary for the rotational movement of the extruder screw.

2. Extruder (1) according to Claim 1, **characterized in that** the axes of rotation of the rotors (8) of at least two motors (9) are in line with one another.

3. Extruder (1) according to Claim 1 or 2, **characterized in that** the axes of rotation of the rotors (8) of at least two motors (9) and the axis of rotation of the extruder screw (2) are in line with one another.

4. Extruder (1) according to one of the preceding claims, **characterized in that** at least some of the rotating parts (rotors (8) and extruder screw (2)) are connected to one another by quickly releasable connecting means.

5. Extruder (1) according to one of the preceding claims, **characterized in that** at least some of the motors (9) have disc-shaped rotors (8), known as disc rotors.

6. Extruder (1) according to one of the preceding claims, **characterized in that** the motors (9) are electrical machines.

7. Extruder (1) according to one of the preceding claims, **characterized in that** the motors (9) are asynchronous electrical machines.

8. Extruder (1) according to one of the preceding claims, **characterized in that** at least some of the motors (9) of the drive unit (3) are connected to a common current transformer or frequency converter.

9. Extruder (1) according to one of the preceding claims, **characterized in that** the motors (9) are controlled, the closed-loop control of the output or input variables of the motors (9) being based on at least one of the following state variables of the extruder (1):
- mass throughput of the extruder (1)
- partial pressure in the barrel (6) of the extruder (1).

10. Extruder (1) according to Claim 9, **characterized in that** one of the motors (9) is speed-controlled and acts as the master in the control hierarchy of the motors (9) and the open-loop or closed-loop control of the remaining motors (9) (slaves) takes place on the basis of torque or current.

11. Extruder according to one of the preceding claims, **characterized in that** the extruder is part of an extrusion installation, such as a blown-film extrusion installation or a cast-film extrusion installation.

12. Method of operating an extruder (1), preferably granular plastics material being transformed into a molten state and the extruder (1) having at least
a) a barrel (6), in which
b) there rotates an extruder screw (2), which
c) is connected to a drive unit (3) with at least one motor (9), so that the drive unit (3) provides the torque for the rotational movement of the extruder screw (2),
d) the at least one motor (9) being assigned one or more rotors (8) and
e) the extruder screw (2) and the at least one rotor (8) being subjected to the same rotational speed during operation,
**characterized in that**
f) the drive unit comprises a number of motors, which together provide the torque necessary for the rotational movement of the extruder screw.

## Revendications

1. Extrudeuse (1) qui amène de préférence un matériau synthétique granuleux en un état de fusion et qui présente au moins
a) un cylindre (6) dans lequel
b) tourne une vis d'extrudeuse (2) qui est
c) reliée à une unité d'entraînement (3) avec au moins un moteur (9), de sorte que l'unité d'entraînement (3) met à disposition le couple de rotation pour le mouvement de rotation de la vis extrudeuse (2),
d) où sont associés à au moins un moteur (9) un ou plusieurs rotors (8),
e) la vis d'extrudeuse (2) et au moins un rotor (8) ont en fonctionnement le même nombre de tours,
**caractérisée en ce que**
f) l'unité d'entraînement est constituée de plusieurs moteurs (9) qui mettent à disposition conjointement le couple de rotation nécessaire pour le mouvement de rotation de la vis d'extrudeuse.

2. Extrudeuse (1) selon la revendication 1,
**caractérisée en ce que**
les axes de rotation des rotors (8) d'au moins deux moteurs (9) sont alignés.

3. Extrudeuse (1) selon la revendication 1 ou 2,
**caractérisée en ce que**
les axes de rotation des rotors (8) d'au moins deux moteurs (9) et l'axe de rotation de la vis d'extrudeuse (2) sont alignés.

4. Extrudeuse (1) selon l'une des revendications précédentes,
**caractérisée en ce qu'**
au moins une partie des parties tournantes (rotors (8) et vis d'extrudeuse (2)) sont reliées entre elles par des moyens de liaison rapidement relâchables.

5. Extrudeuse (1) selon l'une des revendications précédentes,
**caractérisée en ce qu'**
au moins une partie des moteurs (9) présente des rotors en forme de disque (8), des soi-disant rotors à disque.

6. Extrudeuse (1) selon l'une des revendications précédentes,
**caractérisée en ce que**
dans le cas des moteurs (9), il s'agit de machines électriques.

7. Extrudeuse (1) selon l'une des revendications précédentes,
**caractérisée en ce que**
dans le cas des moteurs (9), il s'agit de machines électriques asynchrones.

8. Extrudeuse (1) selon l'une des revendications précédentes,
**caractérisée en ce qu'**
au moins une partie des moteurs (9) de l'unité d'entraînement (3) est connectée à un convertisseur de courant respectivement de fréquence commun.

9. Extrudeuse (1) selon l'une des revendications précédentes,
**caractérisée en ce que**
les moteurs (9) sont réglés, où le réglage des grandeurs de sortie ou d'entrée des moteurs (9) est basé sur au moins une des grandeurs d'état suivantes de l'extrudeuse (1):
- débit de masse de l'extrudeuse (1)
- pression partielle dans le cylindre (6) de l'extrudeuse (1).

10. Extrudeuse (1) selon la revendication 9,
**caractérisée en ce que**
l'un des moteurs (9) est réglé en ce qui concerne le nombre de tours, fonctionne dans la hiérarchie de réglage des moteurs (9) comme maître, et que la commande ou le réglage des moteurs restants (9) (esclaves) a lieu selon le couple de rotation respectivement le courant.

11. Extrudeuse selon l'une des revendications précédentes,
**caractérisée en ce que**
l'extrudeuse fait partie d'une installation d'extrusion, comme d'une installation d'extrusion de feuille de soufflage ou d'une installation d'extrusion de feuille de moulage.

12. Procédé d'opération d'une extrudeuse (1), où de préférence un matériau synthétique granuleux est amené dans un état en forme de fusion et où l'extrudeuse (1) présente au moins
a) un cylindre (6) dans lequel
b) tourne une vis d'extrudeuse (2) qui est
c) reliée à une unité d'entraînement (3) avec au moins un moteur (9) de sorte que l'unité d'entraînement (3) met à disposition le couple de rotation pour le mouvement de rotation de la vis d'extrudeuse (2),
d) où sont associés à au moins un moteur (9) un ou plusieurs rotors (8),
e) la vis d'extrudeuse (2) et le au moins un rotor (8), en fonctionnement, sont sollicités par le même nombre de tours,
**caractérisé en ce que**
f) l'unité d'entraînement est constituée de plusieurs moteurs qui mettent à disposition conjointement le couple de rotation nécessaire pour le mouvement de rotation de la vis d'extrudeuse.
